# EUROPÄISCHE PATENTSCHRIFT

(11) **EP 3 500 801 B1**
(45) Veröffentlichungstag und Bekanntmachung des Hinweises auf die Patenterteilung: **23.03.2022**
(21) Anmeldenummer: 17758027.1
(22) Anmeldetag: 12.07.2017
(51) Int. Cl.: F24F 7/007, F24F 8/108, F24F 8/30, F24F 8/90, F24F 13/28, B01D 46/10, B01D 46/50, B03C 3/017, B03C 3/04, B60H 3/06, F24F 8/192, B60H 3/00, F24F 8/158, B01D 46/00, B01D 46/52, B61D 27/00, F24F 8/10

(54) **ELEKTRO-MECHANISCHES FILTERSYSTEM ZUM REINIGEN VON LUFT IN SCHIENENFAHRZEUGEN**
ELECTRO-MECHANICAL FILTER SYSTEM FOR CLEANING AIR IN RAIL VEHICLES
SYSTÈME DE FILTRE ÉLECTRO-MÉCANIQUE POUR NETTOYER L'AIR DANS DES VÉHICULES FERROVIAIRES

(30) Priorität: 19.08.2016 DE 102016115441
(43) Veröffentlichungstag der Anmeldung: 26.06.2019
(73) Patentinhaber: Faiveley Transport Leipzig GmbH & Co. KG, 04435 Schkeuditz (DE)
(72) Erfinder: BOECK, Lutz, 04435 Schkeuditz (DE); THIERICKE, Christoph, 06682 Teuchern OT Schortau (DE); HOFFMANN, Erik, 04451 Borsdorf (DE)
(74) Vertreter: Rothe, Silke
(86) Internationale Anmeldenummer: PCT/DE2017/100573
(87) Internationale Veröffentlichungsnummer: WO 2018/033172

(56) Entgegenhaltungen:
- WO-A1-2006/072235
- DE-T2- 69 009 104
- DE-T2-602004 008 714
- US-A- 5 330 559
- US-A- 5 403 383

## Beschreibung

Die Erfindung betrifft ein elektro-mechanisches Filtersystem zum Reinigen von Luft, geeignet für Schienenfahrzeuge, bei denen die Luft mittels Heizungs-, Lüftungs- und Klimaanlagen den Aufenthaltsbereichen von Personen zu- bzw. aus diesen abgeführt wird, wobei das Filtersystem einen elektro-mechanischen Filter umfasst, der in einem vom Luftstrom durchströmbaren Gehäuse angeordnet ist und der eine Baugruppe zur elektrostatischen Aufladung der in der Luft enthaltenen Partikel in Kombination mit einem mechanischen Filterelement aufweist.

Filtersysteme zum Reinigen eines Gasstroms werden für verschiedenartige Anwendungen benötigt. In Schienenfahrzeugen kommen für die Filterung der Raumluft typischerweise mechanische Filter zum Einsatz, die als Grobstaubfilter klassifiziert sind. Aufgrund ihres Aufbaus können mit diesen Filtern Feinstaubpartikel, Viren, Bakterien und flüchtige organische Bestandteile nicht und nur sehr eingeschränkt zurückgehalten werden. Um auch solche Luftinhaltsstoffe abzuscheiden, sind höhere Filterklassen (z.B. HEPA Filter oder Aktivkohlefilter) erforderlich. Die Verwendung solcher Filter ist aber mit dem Nachteil einer wesentlichen höheren Druckdifferenz verbunden, die eine höhere Leistung der Zuluftventilatoren erfordert. Dies muss bei der Dimensionierung des Gesamtsystems berücksichtigt werden. Gleichzeitig wird die Filterstandzeit durch den höheren Abscheidegrad reduziert, so dass diese Filter häufiger gewechselt werden müssen. Außerdem benötigen solche Filter im Allgemeinen einen größeren Bauraum. Demzufolge ist eine Integration in den räumlich stark begrenzten Einbauräumen kaum möglich und eine nachträgliche Erhöhung der Filterklasse in bestehenden Anlagen nicht möglich. Weiterhin ergeben sich wegen der Einschränkungen hinsichtlich des verfügbaren Bauraums, der hohen mechanischen Belastungen, den Sicherheitsaspekten und der im Bahnbereich üblicherweise geforderten Lebensdauer von etwa 25 bis 30 Jahren besonders hohe Anforderungen an die Konstruktion.

In öffentlichen Verkehrsmitteln, hier speziell im Schienenverkehr, ergeben sich bedingt durch die hohe Anzahl an Passagieren auf geringem Raum und die abzuführenden thermischen und hygrischen Lasten sehr hohe Luftwechselraten (20 bis 30 Luftwechsel pro Stunde) und damit große Belastungen der Filtersysteme. Auf der anderen Seite ist auch der Anspruch hinsichtlich der Luftqualität in Schienenfahrzeugen besonders hoch.

Für eine Ausfilterung von sehr kleinen Partikeln sind grundsätzlich elektrostatische Filter geeignet. Bei diesem Wirkprinzip wird der Luftstrom durch ein elektrisches Feld geführt, wodurch die im Gas- bzw. Luftstrom enthaltenen Partikel elektrisch aufgeladen werden. An einer im weiteren Strömungsweg angeordneten Abscheideelektrode geben diese Partikel ihre Ladung wieder ab, verlieren dadurch ihre Haftkräfte und gelangen dann in einer größeren räumlichen Struktur zurück in den Gas- bzw. Luftstrom.

In DE 37 23 544 A1 wird ein Partikelfilter beschrieben, bei dem zum Ausfiltern der Partikel aus einem Gasstrom eine Abscheideelektrode verwendet wird, die eine Struktur mit mehreren Windschatten bildenden Konturabschnitten aufweist. In diesen Konturabschnitten werden die elektrostatisch angezogenen Partikel festgesetzt, ohne vom Hauptstrom wieder mitgerissen zu werden.

Aus DE 10 2009 026 010 A1 ist eine Vorrichtung zum Reinigen von Nanopartikeln aus einem Luftstrom in Fahrzeugen bekannt, bei der einem Fahrzeuginnenraum zugeführte Frischluft über eine elektrostatische Abscheidevorrichtung geführt wird.

DE 20 2006 004 522 U1 betrifft einen elektrostatischen Filter, der im Hauptluftstrom der für die Kühlung oder Klimatisierung eines Fahrzeugs benötigten Zuluft angeordnet ist.

Aus DE 690 09 104 T2 ist ein weiterer elektrostatischer Filter bekannt. Gegenstand dieser technischen Lösung ist insbesondere die Konstruktion der elektrostatischen Abscheiderzelle, die zwei auswechselbare Blätter aus mit Aktivkohle beladenem Polyester aufweist.

Ein weiteres Filtersystem ist aus DE 60 2004 008 714 T2 bekannt. Dieses Filtersystem ist zum Reinigen von Luft in Kraftfahrzeugen konzipiert, bei denen die Luft mittels Heizungs-, Lüftungs-und Klimaanlagen der Fahrgastzelle als Aufenthaltsbereich von Personen zu- bzw. aus diesen abgeführt wird. Der elektro-mechanische Filter ist in einem vom Luftstrom durchströmbaren Gehäuse angeordnet und weist eine Baugruppe zur elektrostatischen Aufladung der in der Luft enthaltenen Partikel in Kombination mit einem mechanischen Filterelement auf. Diese technische Lösung betrifft insbesondere spezifische Ausgestaltungen zur Kombination mit einem Plasmakatalysesystem.

Schließlich beschreibt US 5 403 383 A eine elektrostatische Filtervorrichtung mit einer Steuerelektrode und einer Masseelektrode, zwischen denen ein Filtermaterial angeordnet ist. Die beiden Elektroden bestehen aus einem porösen leitenden Material, vorzugsweise aus einem Metallgitter und werden als Masseelektroden auf einem niedrigeren Potential als eine lonisatorelektrode gehalten, die lonisierungsdrähte aufweist, welche mittels Hochspannung erregt werden. Das Filtermaterial ist als ein Verbundmaterial und gefaltet ausgeführt, um die Oberfläche zu vergrößern und somit das Auffangen größerer Mengen von Verunreinigungen zu ermöglichen. Dabei umfasst das Verbundfiltermaterial ein dielektrisches Material mit einem niedrigen Dielektrikum und einer geringen Leitfähigkeit sowie ein relativ leitfähiges Material wie beispielsweise ein mit Kohlenstoff oder einem anderen leitenden Material beschichtetes Glas- oder Kunststofffasermaterial.

Die oben benannten technischen Lösungen vermitteln interessante Ansatzpunkte für eine Filterung kleiner Partikel aus einem Luftstrom mittels elektrostatischer Aufladung dieser auszufilternden Partikel. Allerdings fehlen bisher konkrete Vorschläge für den Einsatz von elektro-mechanischen Filtern für Anwendungen in Schienenfahrzeugen, die bisher primär mit konventionellen Grobstaubfiltern ausgestattet sind.

Aufgabe der Erfindung ist es deshalb, ein Filtersystem zum Reinigen von Luft in Schienenfahrzeugen zu schaffen, das durch den Einsatz eines spezifisch ausgeführten elektro-mechanischen Filters eine wirksame Filterung von sehr kleinen Partikeln wie Feinstaub und Bakterien sowie eine Deaktivierung / Abtötung von Viren ermöglicht.

Die Aufgabe wird mit den technischen Merkmalen gemäß Anspruch 1 gelöst. Demzufolge besteht der elektro-mechanische Filter aus einer lonisierungseinheit, einer in Strömungsrichtung nachgelagerten Abscheideeinheit und aus einem DC/DC-Wandler, wobei die lonisierungseinheit zwei Elektroden aufweist, mit denen ein elektrisches Feld erzeugbar ist, in dem der Luftstrom bzw. die darin enthaltenen Partikel eine elektrostatische Ladung erhalten, wobei die Abscheideeinheit ein Kombifilterelement aufweist, das aus einem Filtervlies und einer in Strömungsrichtung nachgelagerten Aktivkohleschicht besteht und wobei der DC/DC-Wandler mit der Steuerspannung des Schienenfahrzeuges gespeist wird.

Der DC/DC-Wandler stellt die notwendige Hochspannung zur Verfügung. Die angelegte Hochspannung liegt im Bereich von 6 bis 10 kV. Gespeist wird der DC/DC-Wandler mit der Steuerspannung des Schienenfahrzeuges. Üblicherweise ist dies die 110 V DC Versorgung, alternativ sind auch andere Spannungsversorgungen wie 24 V DC, 36 V DC, 48 V DC oder 72 V DC möglich. Um die Sicherheit zu gewährleisten, ist das gesamte Gehäuse geerdet.

Die Hochspannung und somit die elektrostatische Unterstützung kann permanent oder je nach Bedarf zu- oder abgeschaltet werden. Damit ist in vorteilhafter Weise eine aktive Beeinflussung der Filterstandzeit umsetzbar, indem der elektro-mechanische Filter nur auf Streckenabschnitten mit einer besonders hohen Feinstaubbelastung oder in Zeiten des erhöhten Aufkommens an Krankheitserregern eingeschaltet wird.

Unter Beachtung von Sicherheitsaspekten ist vorgesehen, dass beim Öffnen des Deckels, der den Zugang zum Filter ermöglicht (z.B. für Wartungs- oder Reparaturarbeiten) der Stromkreis zum DC/DC-Wandler unterbrochen und dadurch die Hochspannung abgeschaltet wird. Weiterhin ist ein Zugriff von außen hin zur Hochspannungselektrode des elektromechanischen Filters von vorn durch das Eintrittsgitter und von hinten durch das Austrittsgitter nicht möglich. Das Anliegen der Hochspannung kann über einen Statusausgang am DC/DC-Wandler geprüft werden. Vor dem Ausbau des elektromechanischen Filters ist der Hochspannungsanschluss in jedem Fall vom elektromechanischen Filter zu trennen. Hierfür wird z.B. ein Hochspannungssteckverbinder verwendet.

Das Gehäuse ist durch einen Erdungsanschluss mit dem Wagen verbunden. Die Position des Erdungsanschlusses und der Hochspannungsdurchführung ist dabei so gewählt, dass ein einfacher Zugang möglich ist. In Abhängigkeit von den räumlichen Randbedingungen ist dabei eine Positionierung an der Vorderseite oder den Seitenteilen umsetzbar.

Bei der Nachrüstung bestehender Systeme kann der elektro-mechanische Filter in seinen Abmessungen so gestaltet werden, dass er innerhalb der existierenden Filteraufnahme des Klimagerätes ohne wesentliche konstruktive Änderungen eingesetzt werden kann. Zum Wechsel des Kombifilterelements ist lediglich der Deckel auf der Oberseite zu öffnen.

Bisher werden Filterelemente üblicherweise nach einem Wartungsplan gewechselt. Gemäß der Erfindung wird eine Überwachung der Filterbeladung vorgeschlagen zur Rückmeldung, ob der Filter getauscht bzw. gewartet werden muss. Dies ist beispielsweise auf Grundlage von Differenzdruckmessungen über den Filter oder optischen Detektionen der Filteroberfläche möglich.

Als weitere Ausgestaltung können die Filtermaterialien auch in Form eines Rollenfilters und somit faktisch als "Endlosfilter" ausgeführt werden. Hierfür kann gegebenenfalls auch ein motorischer Antrieb zugeordnet werden, der im Ergebnis der Überwachung der Beladung des Filters angesteuert wird.

Mit dem vorgeschlagenen Filtersystem ist bei angelegter Spannung und einem damit aktiven elektrischen Feld eine Erhöhung der Filterklasse möglich. Diese Erhöhung ist auf die elektrostatische Aufladung zurückzuführen, wobei sich der Anfangsdruckverlust nicht erhöht.

Durch Anwendung dieses Filtersystems kann die Luftqualität in Schienenfahrzeugen deutlich verbessert werden. Im Unterschied zu bisher üblichen Systemen können insbesondere auch Viren und Bakterien inaktiviert bzw. abgeschieden werden und der Wirkungsgrad hinsichtlich einer Feinstaubabscheidung wird erhöht.

In der Zeichnung ist ein Ausführungsbeispiel dargestellt, aus dem der grundsätzliche Aufbau eines erfindungsgemäßen Filtersystems ersichtlich ist. Es zeigen:

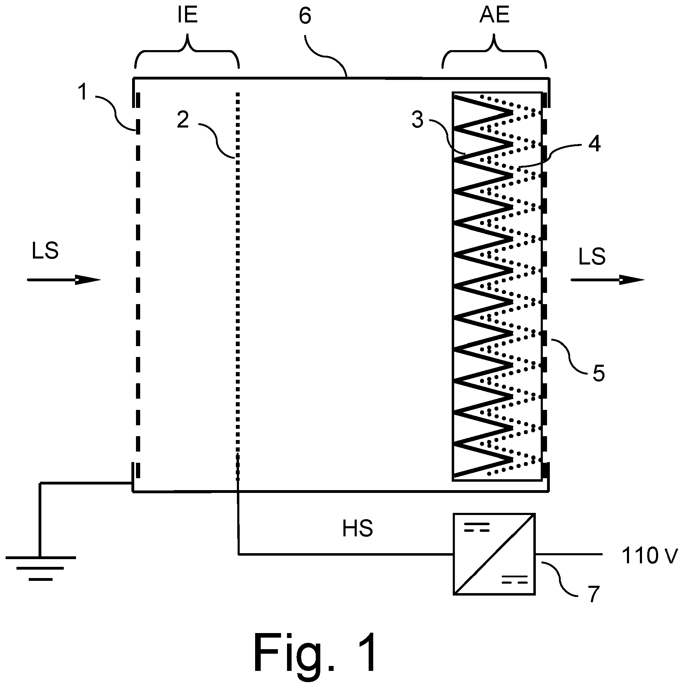

- Fig. 1: den Aufbau eines erfindungsgemäßen Filtersystems in stilisierter Darstellung

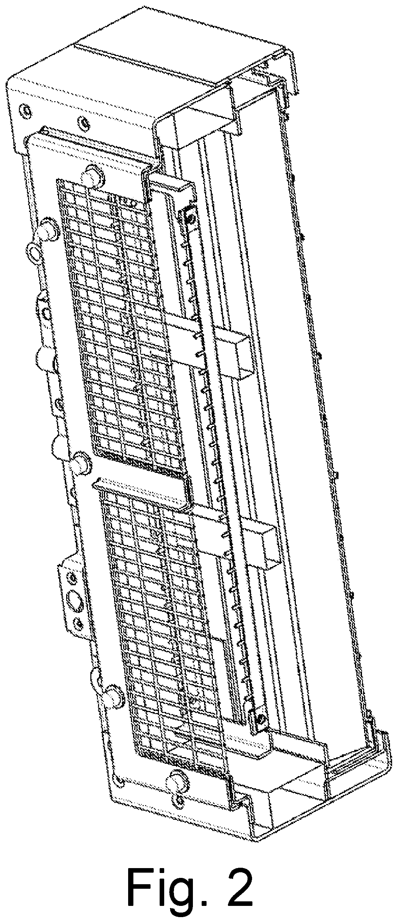

- Fig. 2: eine Ausführungsform des Filtersystems gemäß Fig. 1 in perspektivischer geschnittener Ansicht

Aus der Zeichnung ist der grundsätzliche Aufbau eines erfindungsgemäßen Filtersystems ersichtlich. Demzufolge umfasst dieses Filtersystem einen elektro-mechanischen Filter, der in einem vom Luftstrom "LS" durchströmbaren Gehäuse 6 angeordnet ist. Ein elektromechanischer Filter umfasst stets eine Baugruppe zur elektrostatischen Aufladung der auszufilternden Partikel. Dieser Aufbau ist dem Fachmann grundsätzlich bekannt, so dass an dieser Stelle auf nähere Darlegungen zum Funktionsprinzip verzichtet werden kann. Wesentlich im vorliegenden Sachverhalt ist jedoch, wie dieses bekannte Grundprinzip für eine Anwendung zum Reinigen von Luftströmen für Klimaanlagen von Schienenfahrzeugen modifiziert wird.

Demzufolge besteht der elektro-mechanische Filter aus einer lonisierungseinheit "IE" und einer Abscheideeinheit "AE", die in einem gemeinsamen Gehäuse 6 mit Abstand zueinander angeordnet sind. Bezogen auf den Luftstrom "LS" ist dabei die Abscheideeinheit "AE" in Strömungsrichtung der lonisierungseinheit "IE" nachgelagert.

Das Gehäuse 6 ist durch einen Erdungsanschluss mit dem Schienenfahrzeug verbunden und weist jeweils ein Eintrittsgitter 1 und ein Austrittsgitter 5 auf. Dabei ist das Eintrittsgitter 1 geerdet und als Kontrollelektrode ausgeführt. Das Austrittsgitter 5 ist als Erdungselektrode ausgeführt und ebenfalls mit dem Gehäuseerdpotential verbunden. Des Weiteren stellt das Austrittsgitter den großflächigen, leitenden Erdkontakt zur Aktivkohleschichtsicher, um die gewollten elektrostatischen Anziehungskräfte effektiv ausnutzen zu können. An der Vorderseite des Gehäuses 6 sind außerdem der Erdungsanschluss und die Durchführung der Hochspannungsleitung angeordnet, wobei diese Position auch an einer der beiden kurzen Seiten in Abhängigkeit von den räumlichen Randbedingungen und Schnittstellen gewählt werden kann.

Die lonisierungseinheit "IE" weist zwei Elektroden auf, wobei eine als Sprühelektrode 2 bzw. Hochspannungselektrode 2 und die andere als Eintrittsgitter 1 oder Kontrollelektrode 1 ausgeführt ist. Die Sprühelektroden 2 sind hierbei in einem bestimmten Anordnungsmuster, mit einem bestimmten Abstand zur Kontrollelektrode 1 über den gesamten Lufteinströmquerschnitt verteilt angeordnet. Mit diesen Elektroden wird ein elektrisches Feld erzeugt (Korona Effekt), in dem der Luftstrom "LS" bzw. die darin enthaltenen Partikel eine elektrostatische Ladung erhalten. Wichtig hierbei ist für den Einsatz des Filtersystems, dass die Hochspannungselektrode (hier als Sammelbegriff für alle Sprühelektroden bezeichnet) gegen alle leitfähigen Bauteile außer Kontroll- und Erdelektrode, welche in Verbindung mit dem Gehäuse-Erdpotential stehen, mittels Isolationsmaterialien gegen einen Stromfluss geschützt wird. Damit soll sichergestellt werden, dass die gewünschten elektrischen Wechselwirkungen und Ströme ausschließlich der Luftbehandlung dienen und nicht unerwünschte Kurzschlüsse auftreten.

Die Abscheideeinheit "AE" weist ein Kombifilterelement auf, das aus einem Filtervlies 3 und einer in Strömungsrichtung nachgelagerten Aktivkohleschicht 4 besteht,

Weiterhin umfasst der elektro-mechanische Filter einen DC/DC-Wandler 7, der mit der Steuerspannung des Schienenfahrzeuges gespeist wird. Vorzugsweise erfolgt dies aus einer 110 V DC oder aus einer 24 V DC Versorgung des Schienenfahrzeuges, wobei auch andere Versorgungsspannungen möglich sind. Der Stromkreis zum DC/DC-Wandler 7 wird beim Öffnen des dem elektro-mechanischen-Filterzuganges zugehörigen Klimagerätedeckels selbsttätig unterbrochen.

Die angelegte Hochspannung liegt in einem Bereich von 6 bis 10 kV und ist in Abhängigkeit der aktuellen Einsatzbedingungen zuschaltbar oder abschaltbar oder im bestimmungsgemäßen Betrieb permanent anliegend. Dabei kann das Anliegen der Hochspannung über einen Statusausgang am DC/DC-Wandler 7 überprüft werden. Der Anschluss für die Hochspannung ist vorzugsweise als ein Hochspannungssteckverbinder ausgestaltet, über den der elektro-mechanische Filter vor einem Ausbau elektrisch trennbar ist.

Das erfindungsgemäße Filtersystem kann verschiedenartig weiter ausgestaltet werden, um weitere funktionelle Vorteile zu erreichen. Beispielsweise wird der elektro-mechanische Filter so dimensioniert, dass er bei der Nachrüstung bestehender Systeme innerhalb der existierenden Filteraufnahme des Klimagerätes ohne wesentliche konstruktive Änderungen integriert werden kann. Weiterhin ist eine Überwachung der Filterbeladung möglich, indem auf Grundlage einer Differenzdruckmessung oder einer optischen Detektion der Filteroberfläche eine Mitteilung ausgelöst wird, sobald ein Tausch oder eine Wartung notwendig sind. Ferner kann das Kombifilterelement mit einem rollenförmig ausgestalteten Filtervlies 3 oder mit einer rollenförmig ausgestalteten Aktivkohleschicht 4 ausgeführt werden. Sofern diese mit der Überwachung der Filterbeladung in Wirkverbindung stehen, werden sie bedarfsweise manuell oder elektromotorisch verlagert, so dass stets funktionsfähige Filterkomponenten verfügbar sind.

## Patentansprüche

1. Filtersystem zum Reinigen von Luft, geeignet für Schienenfahrzeuge, bei denen die Luft mittels Heizungs-, Lüftungs- und Klimaanlagen den Aufenthaltsbereichen von Personen zu- bzw. aus diesen abgeführt wird, wobei das Filtersystem einen elektro-mechanischen Filter umfasst, der in einem vom Luftstrom durchströmbaren Gehäuse angeordnet ist und der eine Baugruppe zur elektrostatischen Aufladung der in der Luft enthaltenen Partikel in Kombination mit einem mechanischen Filterelement aufweist, wobei der elektro-mechanische Filter aus einer lonisierungseinheit (IE), einer in Strömungsrichtung nachgelagerten Abscheideeinheit (AE) und aus einem DC/DC-Wandler (7) besteht, wobei die lonisierungseinheit (IE) zwei Elektroden aufweist, mit denen ein elektrisches Feld erzeugbar ist, in dem der Luftstrom (LS) bzw. die darin enthaltenen Partikel eine elektrostatische Ladung erhalten, wobei die Abscheideeinheit (AE) ein Kombifilterelement aufweist, das aus einem Filtervlies (3) und einer in Strömungsrichtung nachgelagerten Aktivkohleschicht (4) besteht, wobei der DC/DC-Wandler (7) die notwendige Hochspannung für die lonisierungseinheit (IE) zur Verfügung stellt und
dafür ausgelegt ist, mit der Steuerspannung des Schienenfahrzeuges gespeist zu werden, wobei das Gehäuse (6) durch einen Erdungsanschluss mit dem Schienenfahrzeug verbindbar ist und ein Eintrittsgitter (1) und ein Austrittsgitter (5) aufweist, wobei das Eintrittsgitter (1) geerdet und als eine Kontrollelektrode und das Austrittsgitter (5) als eine Erdungselektrode ausgeführt ist, wobei der Erdungsanschluss und die Durchführung der Hochspannungsleitung an der Vorderseite oder den Seitenteilen des Gehäuses (6) angeordnet sind, wobei die angelegte Hochspannung in einem Bereich von 6 bis 10 kV liegt und entweder beim bestimmungsgemäßen Betrieb zugeschaltet ist oder bedarfsweise zuschaltbar oder abschaltbar ist, wobei das Anliegen der Hochspannung über einen Statusausgang am DC/DC-Wandler (7) überprüfbar ist und wobei der Anschluss für die Hochspannung als ein Hochspannungssteckverbinder oder als ein funktionsgleiches Bauteil ausgestaltet ist, über den/das der elektro-mechanische Filter vor einem Ausbau elektrisch trennbar ist.

2. Filtersystem nach Anspruch 1, **dadurch gekennzeichnet,**
**dass** beim Öffnen des Klimagerätedeckels der Stromkreis zum DC/DC-Wandler (7) selbsttätig unterbrochen wird.

3. Filtersystem nach Anspruch 1, **dadurch gekennzeichnet,**
**dass** eine Überwachung der Filterbeladung erfolgt, indem auf Grundlage einer Differenzdruckmessung oder einer optischen Detektion der Filteroberfläche bzw. eines definierten Bereiches der Filteroberfläche eine Mitteilung ausgelöst wird, dass ein Tausch oder eine Wartung notwendig sind.

4. Filtersystem nach Anspruch 3, **dadurch gekennzeichnet,**
**dass** das Kombifilterelement ein rollenförmig ausgestaltetes Filtervlies (3) und/oder eine rollenförmig ausgestaltete Aktivkohleschicht (4) aufweist, die mit der Überwachung der Filterbeladung in Wirkverbindung stehen und bedarfsweise manuell oder elektromotorisch verlagerbar sind.

## Claims

1. A filter system for cleaning air, suitable for rail vehicles wherein the air is supplied to or discharged from areas occupied by people by means of heating, ventilation and airconditioning systems, wherein the filter system comprises an electro-mechanical filter which is arranged in a housing through which the air flow can flow, and which has an assembly for electrostatic charging of the particles contained in the air, in combination with a mechanical filter element, wherein the electro-mechanical filter comprises an ionization unit (IE), a separator unit (AE) arranged downstream in the direction of flow, and a DC/DC converter (7), wherein the ionization unit (IE) has two electrodes with which an electric field can be generated in which the air stream (LS) or the particles contained therein obtain an electrostatic charge, wherein the separator unit (AE) has a combi-filter element which consists of a filter fleece (3) and an activated carbon layer (4) arranged downstream in the direction of flow, wherein the DC/DC converter (7) provides the necessary high voltage for the ionization unit (IE) and is designed to be supplied with the control voltage of the rail vehicle, wherein the housing (6) is connectable to the rail vehicle by a ground connection and comprises an inlet grid (1) and an outlet grid (5), wherein the inlet grid (1) is grounded and designed as a control electrode and the outlet grid (5) is designed as a ground electrode, wherein the ground connection and the feed-through of the high voltage line are arranged on the front side or the side parts of the housing (6), wherein the applied high voltage is in a range from 6 to 10 kV and is either switched on during intended operation or can be switched on or off as required, wherein the presence of the high voltage can be checked via a status output on the DC/DC converter (7), and wherein the connection for the high voltage is designed as a high-voltage plug connector or as a functionally equivalent component via which the electro-mechanical filter can be electrically disconnected before removal.

2. The filter system according to claim 1, **characterized in that**
the circuit to the DC/DC converter (7) is automatically interrupted when the lid of the airconditioning unit is opened.

3. The filter system according to claim 1, **characterized in that**
a monitoring of the filter loading is performed by triggering a message that replacement or maintenance is necessary on the basis of a differential pressure measurement or optical detection of the filter surface or of a defined area of the filter surface.

4. The filter system according to claim 3, **characterized in that**
the combi-filter element has a roll-shaped filter fleece (3) and/or a roll-shaped activated carbon layer (4), which are operatively connected to the monitoring of the filter loading and can be displaced as required, either manually or by electric motor.

## Revendications

1. Système de filtration pour la purification de l'air, adapté aux véhicules ferroviaires dans lesquels l'air est amené ou évacué des zones occupées par des personnes au moyen d'installations de chauffage, de ventilation et de climatisation, le système de filtration comprenant un filtre électromécanique agencé dans un logement pouvant être traversé par le flux d'air et comprenant un module pour la charge électrostatique des particules contenues dans l'air en combinaison avec un élément filtre mécanique, le filtre électromécanique étant constitué d'une unité d'ionisation (IE), d'une unité de séparation (AE) placée en aval dans le sens de l'écoulement et d'un convertisseur CC/CC (7), l'unité d'ionisation (IE) comprenant deux électrodes au moyen desquelles un champ électrique peut être généré, dans lequel le flux d'air (LS) ou les particules y figurant reçoivent une charge électrostatique. L'unité de séparation (AE) présentant un élément filtrant combiné constitué d'un non-tissé filtrant (3) et d'une couche de charbon actif (4) placée en aval dans le sens de l'écoulement, le convertisseur CC/CC (7) mettant à disposition la haute tension nécessaire pour l'unité d'ionisation (IE) et étant conçu pour être alimenté par la tension de commande du véhicule ferroviaire, le boîtier (6) pouvant être relié au véhicule ferroviaire par une connexion de mise à la terre et présentant une grille d'entrée (1) et une grille de sortie (5), la grille d'entrée (1) étant mise à la terre et réalisée sous la forme d'une électrode de contrôle et la grille de sortie (5) sous la forme d'une électrode de mise à la terre, la connexion à la terre et le passage de la ligne à haute tension étant disposés sur la face avant ou sur les parties latérales du boîtier (6), la haute tension appliquée se situant dans une plage de 6 à 10 kV et étant soit connectée lors du fonctionnement conforme à la destination, soit connectable ou déconnectable en cas de besoin, la présence de la haute tension pouvant être contrôlée par une sortie d'état sur le convertisseur CC/CC (7) et le raccordement pour la haute tension étant conçu en tant que connecteur à haute tension ou composant de fonction identique, par lequel le filtre électromécanique peut être séparé électriquement avant un démontage.

2. Système de filtration selon la revendication 1, **caractérisé en ce que**,
lors de l'ouverture du couvercle de l'appareil de climatisation, le circuit électrique vers le convertisseur CC/CC (7) est automatiquement interrompu.

3. Système de filtration selon la revendication 1, **caractérisé en ce**
**qu'**une surveillance de la charge du filtre est effectuée en déclenchant, sur la base d'une mesure de pression différentielle ou d'une détection optique de la surface du filtre ou d'une zone définie de la surface du filtre, un message indiquant qu'un remplacement ou un entretien est nécessaire.

4. Système de filtration selon la revendication 3, **caractérisé en ce que**,
l'élément filtrant combiné présente un non-tissé filtrant (3) conçu en forme de rouleau et/ou une couche de charbon actif (4) conçue en forme de rouleau, qui sont en liaison active avec le contrôle de la charge du filtre et peuvent être déplacés manuellement ou par moteur électrique en cas de besoin.
